# EUROPEAN PATENT SPECIFICATION

(11) **EP 2 440 834 B1**
(45) Date of publication and mention of the grant of the patent: **24.04.2019**
(21) Application number: 09776695.0
(22) Date of filing: 08.06.2009
(51) Int. Cl.: F17C 1/16

(54) **COLLAR FOR HIGH-PRESSURE BOTTLES AND PROCESS FOR ITS CONSTRUCTION**
BUND FÜR HOCHDRUCKFLASCHEN UND VERFAHREN FÜR SEINE HERSTELLUNG
COLLIER POUR BOUTEILLES À HAUTE PRESSION ET SON PROCÉDÉ DE FABRICATION

(43) Date of publication of application: 18.04.2012
(73) Proprietor: C.T.S. S.P.A, 33048 Chiopris-Viscone (UD) (IT)
(72) Inventor: FRATTI, Giovanni, 34015 Muggia (Trieste) (IT)
(86) International application number: PCT/EP2009/004104
(87) International publication number: WO 2010/142303

(56) References cited:
- EP-A2- 0 203 631
- WO-A1-99/13263
- WO-A2-01/51844
- DE-A1- 2 152 123
- DE-B3-102006 057 422
- JP-A- 10 332 084
- US-A- 5 287 987
- US-A- 5 938 209

## Description

### Scope of application

The present invention concerns a collar for high-pressure bottles (and the method for its implementation), composed of different metal elements which can be stably coupled to each other, which can be integrated in the mass of the container itself which is formed of composite material, metal alloy, synthetic material, resins and reinforcement fibers.

The nozzle is composed of several elements made of metal or metal alloy, which are stably locked to each other by means of threads and/or welding and/or adhesive bonding and being united with the end of the core (liner), being fixed simultaneously on its two sides, internal and external. Such group has an external polygonal form in order to promote its integration in the mass of composite material which constitutes the bottle, avoiding the possibility of rotating about itself when it is subjected to screwing (in case of insertion of a tap or valve) and guaranteeing at the same time perfect sealing even at high pressures.

The invention is particularly useful and advantageous in the production of bottles made of composite material, of different capacities and at high pressure, on cores made either of synthetic material or of metal (sheet steel, aluminum or metal alloys).

### State of the art

In the current state of the art, there are known - in the production of high-pressure bottles or containers, lined on the outside by several layers of reinforcement fibers and/or synthetic resins - various types of attachment collars for taps and/or safety valves.

Pressure containers are known which are produced entirely of steel or aluminum alloy, with various successive phases of hot forming of the starting material, which form the nozzle directly in the mass of the material, implementing a thread suitable for the locking of a tap or sealing valve. These techniques guarantee the impermeability of the containers to the gases or fluids contained in them, but such technical solutions are expensive,- require high investments in equipment and ground, and the final product is heavy and impractical to move. Therefore, it has been believed first to overcome these problems by implementing the circumferential wrapping with reinforcement fibers and/or resins, reducing thickness of the metallic structure by approximately half; then, secondly, by implementing a circumferential wrapping in axial direction, further reducing thickness and weight of the metallic structure; finally, with a core made of non-structural thermoplastic, reinforced on the outside, with wrappings in all directions.

The first solution, although advantageous from an economic point of view, leads to a very heavy object; the other cases are compromises between production costs and reduction of weight. The last example is the most lightweight, but it has the disadvantage of being partially permeable to gas. This is unacceptable for certain types of gas, such as methane, hydrogen, helium and more generally the various toxic mixtures. The critical point of these products consists in the core and the coupling of the same between the conical nipple and the outlet. The outlet must be implemented in metallic material in order to guarantee a perfect accommodation of the threaded valve; at the interface between the plastic material and the surface of the outlet, the gas tends to penetrate and to produce with time a delamination effect with consequent escape of gas.

For overcoming such disadvantages, the method proposed by patent WO2006/034439 A2 for the construction of nozzles of high-pressure containers is known, where an internal ring of the elastic type is provided which is of the split type for permitting its dilatation. Such internal ring does not allow the insertion of a seal between the core (liner) and the nozzle material; additionally, due to being elastic, such internal ring is not blocked axially; in particular, it could fall inside the container and lose its functionality. This ring could not be of the conical type, since this geometrical shape would not promote its fixing into position, but would on the contrary increase the axial instability. The employed technique must provide at least two seals: one between the external wrapping and the body of the collar, and the other between the external wrapping of the nozzle and the internal core (liner). In addition, this system does not allow replacement of the external seal between the wrapping of the nozzle and the core of the container, since they are both integrated in the same wrapping.

Referring next to patent WO2007/079971 A1: the employed system does not allow disassembly and replacement of the seal, since the external wrapping of the nozzle is integrated in the reinforcement, which prevents the sealing ring from being removed, which would release the seat of the seal itself.

Referring to patents WO2005/0993313 A1, EP 1228862 A1 and WO 96/99142: the three proposed systems are substantially equivalent: they present the metallic structure of the nozzle integrated in the core of the container by means of melting and/ or soakage of the plastic material of the core to the interior of respective cavities, provided in various manner in the metallic structure of the nozzle itself.

All these well-known systems have disadvantages connected to the cohesion between the metallic surfaces and the plastic-polymeric ones of the liner, which, when subjected to high gas pressures, tend to disintegrate with time and to let more and more gas escape through these interfaces. In addition, there is no possibility to intervene on the nozzle, for normal maintenance, without inevitably having to damage the liner as well. Also in the case of the patents WO2006/034439 A2 and WO2007/079971 A1, as already shown, ordinary maintenance of the seals for their possible replacement is not possible (the warranty of efficiency of the container is reduced with time and use).

### Object of the invention

It is therefore the object of the present invention to redress the disadvantages encountered with the known techniques, implementing a collar or nozzle for high-pressure reinforced bottles (of composite material) and a construction method which has the following characteristics:
- a nozzle adapted and connectible with sealing safety equally for cores (liners) of metallic material and/or of plastic material,
- an internal sealing ring of the integral, not elastic split, type, of conical type, able to contain a toroidal seal between said ring and the core of the bottle;
- a sealing ring which can be conical in order to increase the adhesion of the internal and external surfaces of the core to the external surface of the ring and the internal surface of the external wrapping of the nozzle, respectively;
- an internal ring which is perfectly stable in position and screwed to the external wrapping of the nozzle;
- an internal shape of the sealing ring which has a hexagonal seat for facilitating its assembly and disassembly;
- the external part of the nozzle which presents a polygonal (for instance an octagonal) shape, on which the reinforcement fibers with the resins are wrapped, forming an integral body, integrating it: this defines an extraordinary fastening torque for the screwing the valve or tap into the internal part of the nozzle, such torque being unloaded on the nozzle and on the external wrapping and not on the core of the bottle;
- avoidance of the tensions normally placed on the end of the core, distributing them on a larger surface concerning both the internal and the external portion of the same: in the internal portion, by means of the ring in direct contact with the smooth and/or threaded, cylindrical and/or conical surface, and in the external portion by means of the nozzle body with smooth and/or threaded, cylindrical and/or conical surface.

### Essence of the invention

The objects of the invention are achieved according to the characteristics of the main claim and/or of any other claim presented in this patent, by implementing a collar for high-pressure bottles - lined with several layers of reinforcement fibers and resins - and the exemplification of the respective construction method.

The implementation of a collar (or attachable elements made of metallic material) is proposed, which is suitable to be coupled with a core (liner, consisting of thin steel sheet or of light alloy of aluminum or plastic material), forming in this manner an outlet incorporated in the external synthetic reinforcement lining mass, in which successively a gas supply valve is received, avoiding losses through the connection interface between the core and the outlet itself.

In a first solution, the internal part of the outlet consists of a ring of tubular cylindrical shape of metallic material and has a first upper internal part threaded and adapted to receive a valve by screwing; the second part is obviously perforated and shaped (in transversal section) as a hexagon, so that it can be extracted with a hexagonal wrench for its maintenance; being screwed to the second element external of the outlet. In the first external part of the ring, there is a thread for the screwing to the second element of the outlet. In a lower portion, the external surface is perfectly smooth and interrupted by an annular groove suitable to receive a toroidal seal; this surface will adhere to the core of the bottle (of metallic or plastic sheet).

The external body of the outlet, also made of metal, or the second element forming the outlet is formed as follows: in the first upper internal part, there is a thread for screwing to the internal ring; in the second part, there is a cylindrical recess with a smooth surface for receiving the core of the bottle, interrupted by an annular groove for receiving an annular seal. This internal part ends in a connection towards the outside, accompanying the core, and in a successive and ample broadening of thinned material, thus forming a broad support surface on the core itself. In the external part of this element, a first simply cylindrical portion is provided which broadens forming a configuration with polygonal (for instance octagonal) section with protruding teeth which then tapers until it has reached the final part of the element.

This solution allows complete extraction of the internal ring element for performing the maintenance or control and/or the replacement of the internal seal.

The method for fixing the outlet to the core of the bottle is as follows: firstly the external toroidal seal is positioned within the suitable seat of the external element of the outlet; said external element is brought closer to the core of the bottle and made to adhere perfectly; the other internal seal is inserted in the suitable seat of the internal ring element; the same is screwed completely to the external body of the outlet, enclosing the core between the attachable elements; finally the external reinforcement wrapping with several layers of fibers and resins is carried out, enclosing - in particular - the external part with greater over-thickness in proximity to the external element of the outlet, covering the polygonal shape as well.

The product obtained in this manner is technically perfect: an outlet which avoids delamination of the gas also at high pressure between the core of the bottle and the contact walls of the outlet itself, also due to the two toroidal seals, internal and external to the core itself, and the ample thickness of the wrapping with reinforcement fibers and resins in proximity to the attachment area of the outlet to the core of the bottle.

In a second solution, the internal part of the outlet is different in its lower internal shape: instead of terminating cylindrically, it is broadened, increasing in diameter and following the connection of the core of the bottle, presenting two seats for receiving the seal (one in the cylindrical section and the other, which has a larger diameter, in the final section for surface contact). In this case, the seal on the outside of the core is not envisaged; as for the rest, it is identical with the first case illustrated above. This solution cannot be disassembled; therefore, its maintenance is not possible; it is recommended in case bottles are constructed with junction of the core along the longitudinal part of the bottle itself.

It follows that the attachment of the outlet to the core is different from the preceding example, since the internal element of the outlet, equipped with two toroidal seals, is inserted from the internal part of the bottle (and can no longer be pulled out) and is made to adhere to the terminal part of the core; it is then screwed on the outside to the second external portion of the outlet, which has no seats for the sealing. Once the two attachable elements of the outlet are locked, the terminal part of the core of the bottle is simultaneously enclosed between them. Then the ample external wrapping of the entire attachment zone of the outlet and of the entire bottle is carried out with reinforcement fibers and resins.

Another variation of the present invention concerns the possibility of providing on the terminal portion of the core of the bottle, whether it is made of metal or of plastics, and provided with sufficient thickness, an internal and an external thread. The external one is used for screwing to it the external element of the outlet (in this manner, another sealing is not necessary); whereas the internal one is used for screwing to it (after insertion in the suitable seat of the internal seal) the internal ring forming the outlet. In this manner, the terminal part of the core of the bottle is enclosed between the two elements of the outlet; then the external wrapping (of ample thickness) with the reinforcement fibers and/or synthetic resin is performed, covering completely the joining region of the nozzle and the core.

Another variation of the present invention consists in the fact that the two threads - external and internal - of the terminal part of the core of the bottle are of the conical type, thus corresponding also to those of the external ring element and of the internal ring element forming the outlet. This technical particularity improves the tightness and the time-efficiency of the bottle.

The invention achieves the proposed objects which are: overcoming the disadvantages known in this field; guaranteeing tightness over time by means of employing a modular nozzle of two metallic parts which enclose the terminal portion of the core of the bottle, avoiding delamination of gas even at high pressure; allowing implementation of high-pressure bottles while significantly lowering their weight, thus facilitating their handling and their transport; permitting, in some solutions described, interchangeability of the internal ring part, facilitating maintenance and making it possible to replace the internal sealing.

### Explanation of the drawings

Four solutions according to the present invention are represented for preferential exemplary purposes, though not limiting, in the five enclosed figures, wherein:

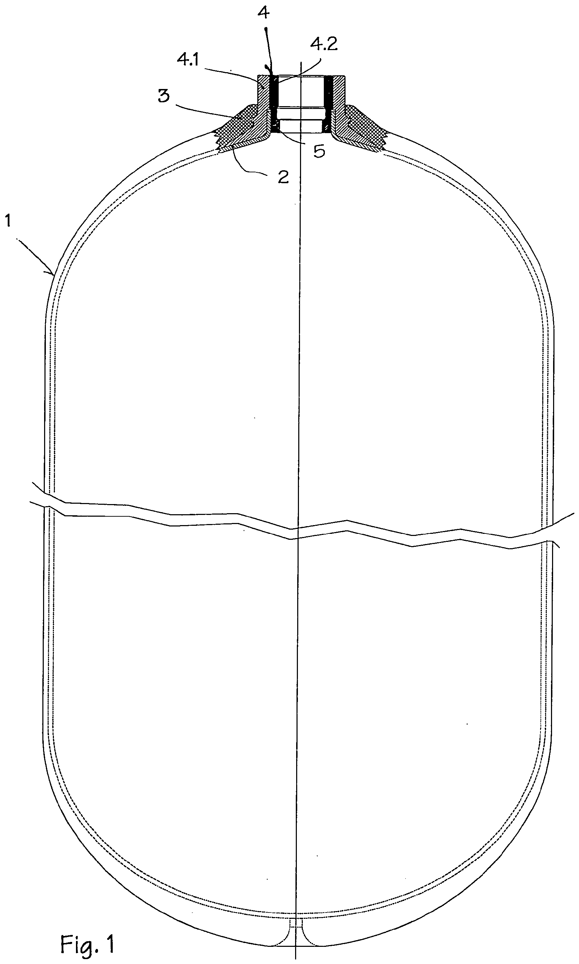

- Fig. 1 shows, in a sectional front view, a high-pressure bottle consisting of a core made of sheet metal or lined with plastic and/or reinforced with fibers and resins, pointing out the region of the collar or modular nozzle equipped with only one sealing in the internal part and an extractable ring component;
- Fig. 2 shows, in cross-sectional and plan view, the nozzle with the internal attachment element carrying a seal of the annular and extractable type, having two sealing seals (one on the internal side and one on the external side of the terminal part of the core);

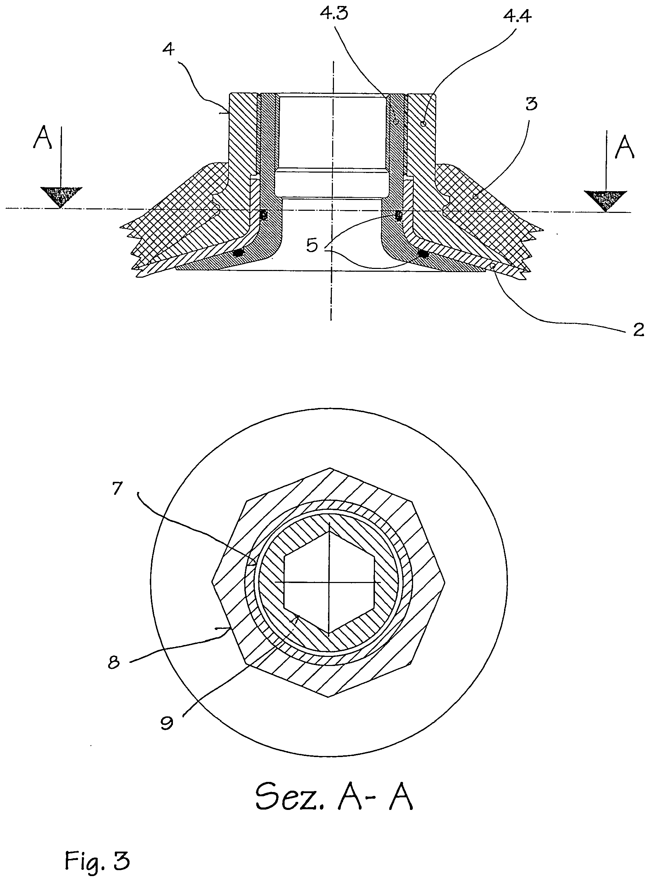

- Fig. 3 shows, in cross-sectional and plan view, the modular nozzle provided with an internal element with two sealing seals, of the type which cannot be extracted, and inserted in the bottle only during the construction phase;

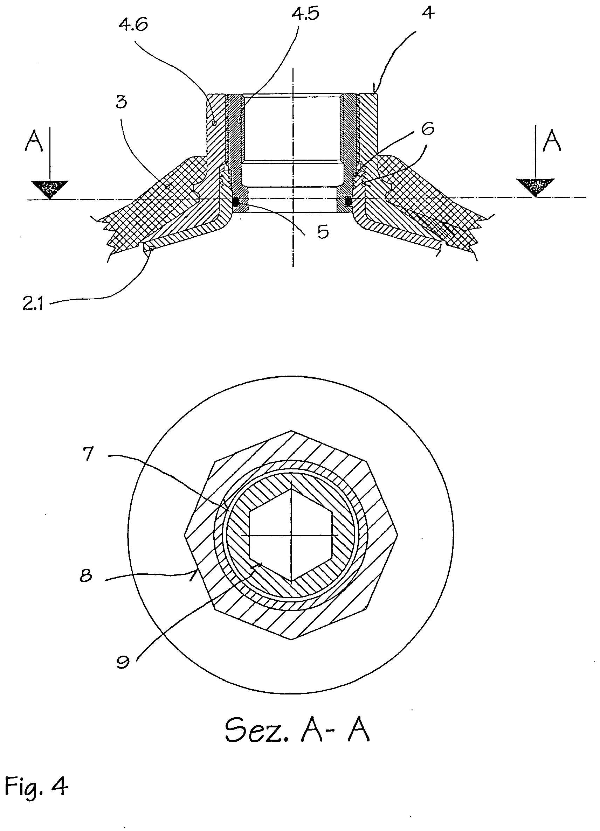

- Fig. 4 shows, in cross-sectional and plan view, the modular nozzle with an extractable internal ring element, with the terminal part of the core of the bottle threaded both on the outside and on the inside;

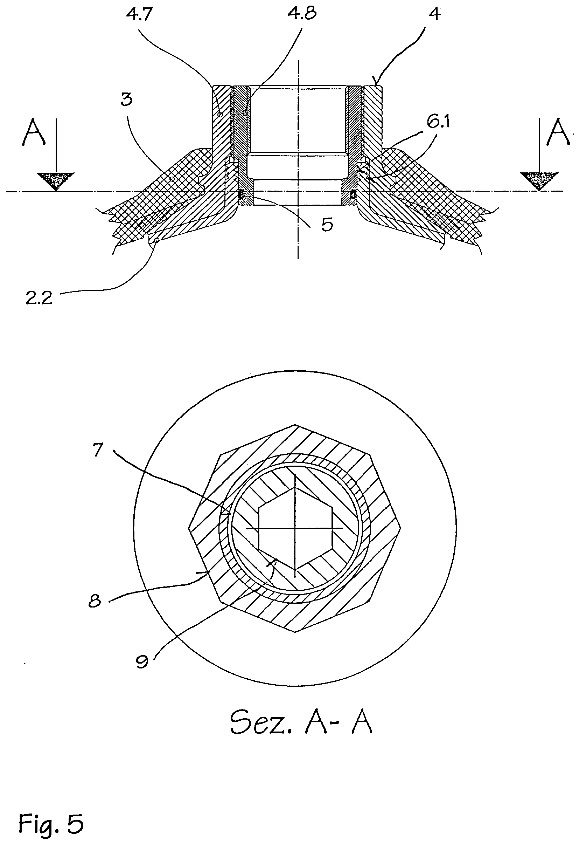

- Fig. 5 shows, in cross-sectional and plan view, the modular nozzle similar to the preceding figure, where however the external and internal threads of the terminal portion of the core are of the conical type, and having analogous threads on the respective surfaces of the two nozzle components.

As can be seen from the various figures, the collar or nozzle for high-pressure bottles is applied to the terminal part of the core (2) of the bottle (1), made of sheet steel or light alloy or plastics or synthetic material, reinforced externally with a plurality of layers made of composite material (3) as reinforcement fibers imbibed in synthetic resins which will integrate the nozzle (4) in the mass forming the high-pressure bottle.

The invention is represented in the construction solutions of the various types of nozzle (4), formed of different elements which can be combined with each other, in order to guarantee tightness and avoid delamination of the (pressure) gas contained in the bottles themselves.

First of all, the nozzle (4) is composed of two metallic parts worked with precision, an external part (4.1) and an internal part (4.2), coaxial and both ring shaped, which can be screwed and united to each other due to the internal thread of the external element and the external thread of the internal annular element. Between these parts, there remains a lower space suitable to contain, enclose and lock the terminal part of the core (liner) (2) of the bottle.

On the upper internal part of the internal ring (4.2), there is provided a thread for blocking a valve or tap for supply of the gas contained in the bottle (1). In addition, on the lower external part of the ring element (4.2), there is provided at least one annular seat (7) for receiving at least one toroidal seal (5) which is brought in direct contact with the internal part of the core of the bottle (2). This ring is removable and can be unscrewed as required for performing the maintenance or the replacement of the seal (5).

For facilitating the locking of this ring to the external body (4.1) of the nozzle and/or its removal, a formed seat - for instance of hexagonal shape (9) - is provided in the central perforated part so that a torque can be applied by insertion of a suitable wrench. For the same reason, the external element of the nozzle has on its upper external portion, on the external surface, a double flat seat, placed in opposition, parallel and coaxial for insertion of a wrench and then achieving greater efficiency in the action of locking or unlocking these two elements which form the nozzle. In the central lower part of the external element (4.1), there is provided a polygonal (for instance octagonal) configuration (8) whose purpose it is to provide more surface resistant to axial rotation after wrapping with several layers of reinforcement fibers and resins.

The relative procedure of implementing the collar and of fixing it to the core of the bottle (made of metal or plastic) comprises: insertion of the seal (5) into the seat (7) of the internal element (4.2); then the same is positioned on the internal terminal portion of the core (2) of the bottle (1); then the external element (4.1) of the nozzle (4) is vigorously screwed to the internal element (4.2), thus enclosing the core of the bottle; once the locking has taken place, the external wrapping with several layers of reinforcement fibers and resins is carried out, forming a substantial thickness of the composite material (3) which covers and integrates the external shaped part (8).

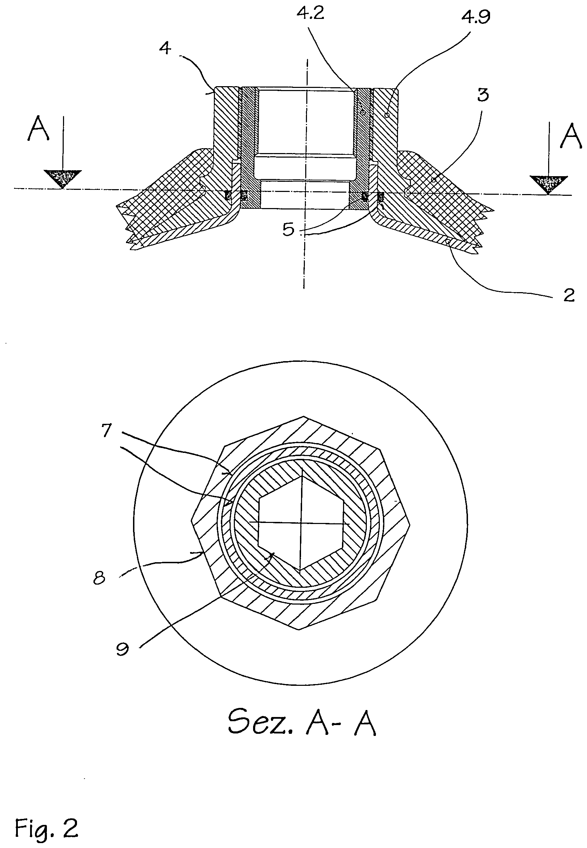

After this embodiment solution, in Fig. 2 there is illustrated an embodiment in which alternatively the possibility is envisaged of providing, on the external element (4.9) of the nozzle, an annular seat (7) on the internal portion, placed in opposition to the one formed in the internal element (4.2) of the nozzle, in order to be able to insert an annular seal (5) externally to the core (2) as well. In this case as well, the internal component (4.2) of the nozzle is of the type which can be extracted for maintenance.

In the third representation, a solution different from the preceding ones is illustrated, in which the internal element (4.3) of the nozzle is not extractable and can be applied only from the internal part of the core of the bottle (in the case of bottles of substantial length where welding of the two parts forming the core is envisaged). The lower part of said element (4.3) broadens in a circular manner; therefore it cannot be extracted through the opening of the nozzle. It has two consecutive annular seats (7) on the face in contact with the core (2) of the bottle, one on the cylindrical portion and the other on the inclined portion of said core. In this case, the external element (4.4) is identical with the element (4.1) in the first representation.

The fourth representation is a variation of the first representation with the only difference existing in the terminal part of the core (2); it presents, both in the internal portion and in the external one, a thread (6) analogously in the respective portions of the two elements forming the nozzle (4), the internal portion (4.5) and the external portion (4.6).

Finally, the fifth representation is similar to the preceding one with the only difference that the threads - both on the terminal sections of the core (6.1) and in the two components of the nozzle, internal (4.8) and external (4.7) - are of the conical type, like those commonly used in the hydraulic sector. In this case, the more the elements are tightened in play between them (elements of the nozzle and the core of the bottle), the more the parts tighten themselves, guaranteeing maximum tightness between the parts and avoiding in this manner the delamination of the gas contained.

Naturally, the invention is not limited to the examples of embodiment described above, departing from which other forms and other embodiments can be provided, and the details of implementation can in any case vary without departing from the essence of the invention as it is disclosed and claimed in the following.

## Claims

1. Collar for high-pressure bottles, to be implemented with an internal core (2, 2.1, 2.2) made of a sheet of metallic or plastic material and lined on the outside with several layers of reinforcement fibers and resins,
wherein the collar is composed of an internal part (4.2, 4.3, 4.5, 4.8) and an external part (4.1, 4.4, 4.6, 4.7, 4.9) which can be attached to each other forming a nozzle (4), the internal part (4.2, 4.5, 4.8) being in the form of a cylindrical ring, whose upper portion has an external thread for being screwed to the external part (4.1, 4.4, 4.6, 4.7, 4.9) and an internal thread for being screwed to a supply valve or tap; and the external part (4.1, 4.4, 4.6, 4.7, 4.9), whose first upper portion is in the form of a cylindrical ring and which terminates at the lower end in a broadened manner in a circular inclined and connected flange, having on the upper internal portion a thread which can be screwed to the one formed on the internal part (4.2, 4.5, 4.8);
wherein the external part (4.1, 4.4, 4.6, 4.7, 4.9) and the internal part (4.2, 4.5, 4.8) are formed of metallic material and wherein the first upper portion of the external part (4.1, 4.4, 4.6, 4.7, 4.9) and the internal part (4.2, 4.5, 4.8) which are both in the form of a cylindrical ring define, when the coupling has taken place, a substantially cylindrical space sufficient for enclosing, containing and locking between them the core (2, 2.1, 2.2) of a bottle (1); wherein at least one of the external part (4.1, 4.4, 4.6, 4.7, 4.9) and the internal part (4.2, 4.5, 4.8) has at least one seat or annular groove (7) on the surface in contact with the core (2, 2.1, 2.2) of the bottle (1), suitable for receiving a toroidal seal (5), preferably shaped as an O-ring or with a lip;
wherein the external part (4.1, 4.4, 4.6, 4.7, 4.9) is further lockable to the core (2, 2.1, 2.2) of the bottle (1) by means of an external wrapping with several layers (3), preferably made of reinforcement fibers and resins, integrating the external part (4.1, 4.4, 4.6, 4.7, 4.9) almost completely in the mass of the bottle (1).

2. Collar according to claim 1, wherein the internal part (4.2, 4.5, 4.8) is of annular form of the extractable type which can be disassembled and reassembled by unscrewing and screwing in order to facilitate the maintenance and the replacement of the annular seal or seals (5) contained in it.

3. Collar according to claims 1 or 2, wherein the central portion of the internal part (4.2, 4.5, 4.8) of the nozzle (4) has an internal axial formed seat (9), preferably hexagonally shaped, suitable for receiving a wrench in order to facilitate the action of locking and/or disassembly with the respective external part (4.1, 4.4, 4.6, 4.7, 4.9).

4. Collar according one or more of claims 1 to 3, wherein the external part (4.6) and the internal part (4.5) forming the nozzle (4) have respective internal-external threads in direct contact with the end of the core (2.1), the same being threaded (6) as well, both on the internal terminal part and on the external one.

5. Collar according to claim 4, wherein the threads both on the external and internal terminal part of the core (2.2) and on the external part (4.7) and the internal part (4.8) of the nozzle (4) are of the conical type (6.1).

6. Collar according to one or more of claims 1 to 5, wherein the external part (4.9) of the nozzle (4) has, in the internal part in contact with the core (2, 2.1, 2.2), at least one grooved seat (7) suitable for receiving an appropriate toroidal seal (5).

7. Collar for high-pressure bottles, preferably implemented with an internal core (2) made of a sheet of metallic or plastic material and lined on the outside with several layers of reinforcement fibers and resins,
wherein the collar is composed of an internal part (4.3) and an external part (4.4) which can be attached to each other forming a nozzle (4), the internal part (4.3) being in the form of a cylindrical ring, whose upper portion has an external thread for being screwed to the external part (4.4) and an internal thread for being screwed to a supply valve or tap; and the external part (4.4), whose first upper portion is in the form of a cylindrical ring and which terminates at the lower end in a broadened manner in a circular inclined and connected flange, having on the upper internal portion a thread which can be screwed to the one formed on the internal part (4.3);
wherein the external part (4.4) and the internal part (4.3) are formed of metallic material and define, when the coupling has taken place, a space sufficient for enclosing, containing and locking between them the core (2) of a bottle (1);
wherein the internal part (4.3) has at least one seat or annular groove (7) on the surface in contact with the core (2) of the bottle (1), suitable for receiving a toroidal seal (5), preferably shaped as an O-ring or with a lip;
wherein the external part (4.4) is further lockable to the core (2) of the bottle (1) by means of an external wrapping with several layers (3), preferably made of reinforcement fibers and resins, integrating the external part (4.4) almost completely in the mass of the bottle (1),
wherein the internal element (4.3) of the nozzle (4) cannot be extracted through the central opening, since it is of a flared shaped in the internal part - enlarging circumferentially - and has at least two seats (7) for containing seals (5), one on the cylindrical part and one on the enlarged part, in direct contact with the core (2) of the bottle (1).

8. Collar according to one or more of claims 1 to 7, wherein in the central lower part of the external part (4.1, 4.4, 4.6, 4.7, 4.9), there is provided a polygonal configuration (8), preferably an octagonal configuration, such as to make available more surface resistant to axial rotation after wrapping with several layers (3) of reinforcement fibers and resins.

9. Method for fixing a collar according to one or more of claims 1 to 8 to the body of a bottle (1) implemented using composite materials, comprising:
inserting the seal (5) in the corresponding seat or annular groove (7) formed in the internal part (4.2, 4.5, 4.8), or inserting a respective seal (5) in a respective corresponding seat or annular groove (7) formed in the internal part (4.2, 4.5, 4.8) and the external part (4.1, 4.4, 4.6, 4.7, 4.9);
placing the internal part (4.2, 4.5, 4.8) in adherence on the internal terminal part of the core (2, 2.1, 2.2) of the bottle (1);
screwing the external part (4.1, 4.4, 4.6, 4.7, 4.9) to the internal part (4.2, 4.5, 4.8) and locking in this manner the terminal part of the core (2, 2.1, 2.2);
wrapping of the external part (4.1, 4.4, 4.6, 4.7, 4.9) of the nozzle (4) with several layers (3) of reinforcement fibers, preferably glass fibers and equivalents, and resins during the final construction phase of the entire bottle (1) of the lightweight type, obtained by wrapping of the core (2, 2.1, 2.2), preferably made of metal sheet or plastic and the like, with composite materials, preferably reinforcement fibers and synthetic resins.

## Patentansprüche

1. Manschette für Hochdruckflaschen, auszuführen mit einem Innenkern (2, 2.1, 2.2) aus einer Folie aus Metall- oder Kunststoffmaterial, der außen mit mehreren Schichten Verstärkungsfasern und Harzen ausgekleidet ist,
wobei die Manschette aus einem Innenteil (4.2, 4.3, 4.5, 4.8) und einem Außenteil (4.1, 4.4, 4.6, 4.7, 4.9) besteht, die miteinander verbunden werden können und eine Düse (4) bilden, wobei der Innenteil (4.2, 4.3, 4.5, 4.8) die Form eines zylindrischen Rings aufweist, dessen oberer Abschnitt ein Konstantgewinde zum Verschrauben mit dem Außenteil (4.1, 4.4, 4.4, 4.6, 4.7, 4.9) aufweist und ein Innengewinde zum Anschrauben an ein Versorgungsventil oder einen Gewindebohrer, dessen erster oberer Abschnitt die Form eines zylindrischen Rings hat und der am unteren Ende in verbreiterter Form in einem kreisförmigen, geneigten und verbundenen Flansch endet, mit einem Gewinde, das an dem oberen Innenabschnitt mit dem am Innenteil (4.2, 4.3, 4.5, 4.8) ausgebildeten verschraubbar ist;
wobei der Außenteil (4.1, 4.4, 4.6, 4.6, 4.7, 4.9) und der Innenteil (4.2, 4.3, 4.5, 4.8) aus Metall gefertigt sind und im ersten oberen Abschnitt des Außenteils (4.1, 4.4, 4.6, 4.7, 4.9) und im Innenteil (4.2, 4.3, 4.5, 4.8), die beide die Form eines zylindrischen Rings haben und, wenn die Kupplung stattgefunden hat, einen im Wesentlichen zylindrischen Raum festlegt, der ausreicht, um den Kern (2, 2.1, 2.2) einer Flasche (1) zu umschließen, zu enthalten und zwischen ihnen zu verriegeln;
wobei mindestens einer der äußeren Teile (4.1, 4.4, 4.4, 4.6, 4.7, 4.9) und der innere Teil (4.2, 4.3, 4.5, 4.8) mindestens einen Sitz oder eine Ringnut (7) auf der Oberfläche hat, der den Kern (2, 2.1, 2.2) der Flasche (1) kontaktiert und zur Aufnahme einer torusförmigen Dichtung (5), vorzugsweise geformt als O-Ring oder mit einer Lippe, geeignet ist;
wobei der Außenteil (4.1, 4.4, 4.6, 4.6, 4.7, 4.9) ferner mit dem Kern (2, 2.1, 2.2) der Flasche (1) durch eine äußere Umhüllung mit mehreren Schichten (3), vorzugsweise aus Verstärkungsfasern und Harzen, verriegelbar ist, die den Außenteil (4.1, 4.4, 4.4, 4.6, 4.7, 4.9) nahezu vollständig in die Masse der Flasche (1) integriert.

2. Manschette nach Anspruch 1, wobei der Innenteil (4.2, 4.3, 4.5, 4.8) ringförmig und abnehmbar ist, die durch Lösen und Verschrauben demontiert und wieder zusammengesetzt werden kann, um die Wartung und den Austausch der ringförmigen Dichtung der darin enthaltenen Dichtungen (5) zu erleichtern.

3. Manschette nach Anspruch 1 oder 2, wobei der Mittelabschnitt des Innenteils (4.2, 4.3, 4.5, 4.8) der Düse (4) einen innen liegenden, axial geformten Sitz (9) aufweist, vorzugsweise sechseckig geformt, der zur Aufnahme eines Schlüssels geeignet ist, um die Verriegelung und/oder Demontage mit dem jeweiligen Außenteil (4.1, 4.4, 4.4, 4.6, 4.7, 4.9) zu erleichtern.

4. Manschette nach einem oder mehreren der Ansprüche 1 bis 3, wobei der Außenteil (4.6) und der die Düse (4) bildende Innenteil (4.5) entsprechende Innen-Außengewinde in direktem Kontakt mit dem Ende des Kerns (2.1) aufweisen, die ebenfalls sowohl am inneren als auch am äußeren Anschlussteil mit einem Gewinde (6) versehen sind.

5. Manschette nach Anspruch 4, wobei die Gewinde sowohl am äußeren und inneren Anschlussteil des Kerns (2.2) als auch am äußeren Teil (4.7) und am inneren Teil (4.8) der Düse (4) kegelförmig ausgebildet sind (6.1).

6. Manschette nach einem oder mehreren der Ansprüche 1 bis 5, wobei der Außenteil (4.9) der Düse (4) im Innenteil in Kontakt mit dem Kern (2, 2.1, 2.2) mindestens einen gerillten Sitz (7) aufweist, der zur Aufnahme einer geeigneten Torusdichtung (5) geeignet ist.

7. Manschette für Hochdruckflaschen, vorzugsweise ausgeführt mit einem Innenkern (2.2) aus einer Folie aus Metall- oder Kunststoffmaterial, der außen mit mehreren Schichten Verstärkungsfasern und Harzen ausgekleidet ist,
wobei die Manschette aus einem Innenteil (4.3) und einem Außenteil (4.4) besteht, die miteinander verbunden werden können und eine Düse (4) bilden, wobei der Innenteil (4.3) die Form eines zylindrischen Rings aufweist, dessen oberer Abschnitt ein Konstantgewinde zum Verschrauben mit dem Außenteil (4.4) aufweist und ein Innengewinde zum Anschrauben an ein Versorgungsventil oder einen Gewindebohrer, dessen erster oberer Abschnitt die Form eines zylindrischen Rings hat und der am unteren Ende in verbreiterter Form in einem kreisförmigen, geneigten und verbundenen Flansch endet, mit einem Gewinde, das an dem oberen Innenabschnitt mit dem am Innenteil (4.3) ausgebildeten verschraubbar ist;
wobei der Außenteil (4.4) und der Innenteil (4.3) aus metallischem Material gebildet sind und, wenn die Kupplung stattgefunden hat, einen Raum bestimmen, der ausreicht, um den Kern (2) einer Flasche (1) einzuschließen, zu enthalten und zwischen ihnen zu verriegeln;
wobei mindestens der innere Teil (4.3) mindestens einen Sitz oder eine Ringnut (7) auf der Oberfläche hat, der den Kern (2.2) der Flasche (1) kontaktiert und zur Aufnahme einer torusförmigen Dichtung (5), vorzugsweise geformt als O-Ring oder mit einer Lippe, geeignet ist;
wobei der Außenteil (4.4) weiterhin mit dem Kern (2) der Flasche (1) durch eine äußere Umhüllung mit mehreren Schichten (3), vorzugsweise aus Verstärkungsfasern und Harzen, verriegelbar ist, die den Außenteil (4.4) nahezu vollständig in die Masse der Flasche (1) integriert,
wobei das Innenelement (4.3) der Düse (4) nicht durch die Mittenöffnung herausgezogen werden kann, da es im Inneren von aufgeweiteter Form ist - die sich umlaufend vergrößert - und mindestens zwei Sitze (7) zur Aufnahme von Dichtungen (5) aufweist, eine auf dem zylindrischen Teil und eine auf dem vergrößerten Teil, die in direktem Kontakt mit dem Kern (2) der Flasche (1) stehen.

8. Manschette nach einem oder mehreren der Ansprüche 1 bis 7, wobei im mittleren unteren Teil des Außenteils (4.1, 4.4, 4.6. 4.7, 4.9) eine polygonale Konfiguration (8), vorzugsweise eine achteckige Konfiguration, vorgesehen ist, damit nach dem Umwickeln mit mehreren Schichten (3) von Verstärkungsfasern und Harzen eine gegenüber axialer Drehung widerstandsfähigere Oberfläche gegeben ist.

9. Verfahren zum Befestigen einer Manschette nach einem oder mehreren der Ansprüche 1 bis 8 am Flaschenkörper (1) unter Verwendung von Verbundwerkstoffen, die Folgendes umfasst:
Einsetzen der Dichtung (5) in den entsprechenden Sitz der im Innenteil (4.2, 4.3, 4.5, 4.8) ausgestalteten Ringnut (7) oder Einsetzen einer entsprechenden Dichtung (5) in die jeweils entsprechende Aufnahme oder in die (7) im Innenteil (4.2, 4.3, 4.5, 4.8) ausgestaltete Ringnut und im Außenteil (4.1, 4.4, 4.4, 4.6, 4.7, 4.9);
Einsetzen des Innenteils (4.2, 4.3, 4.5, 4.8) in Übereinstimmung mit dem inneren Endteil des Kerns (2, 2.1, 2.2) der Flasche (1);
Verschrauben des Außenteils (4.1, 4.4, 4.6, 4.6, 4.7, 4.9) mit dem Innenteil (4.2, 4.3, 4.5, 4.8) und Verriegeln des Anschlussteils des Kerns (2, 2.1, 2.2) auf diese Art und Weise;
Umhüllung des Außenteils (4.1, 4.4, 4.6, 4.6, 4.7, 4.9) der Düse (4) mit mehreren Schichten (3) von Verstärkungsfasern, vorzugsweise mit Glasfasern und Gleichwertigem, und Harzen während der letzten Bauphase der gesamten Flasche (1) in Leichtbauweise, die durch Umhüllung des Kerns (2, 2.1, 2.2), vorzugsweise aus Blech oder Kunststoff und dergleichen, mit Verbundwerkstoffen, vorzugsweise Verstärkungsfasern und Kunstharzen, erhalten wird.

## Revendications

1. Col pour bouteilles à haute pression, à appliquer avec un noyau interne (2, 2.1, 2.2) fabriqué en tôle de matériau métallique ou en plastique et doublé sur l'extérieur avec plusieurs couches de fibres et de résines de renforcement,
où le col est composé d'une partie intérieure (4.2, 4.3, 4.5, 4.8) et d'une partie extérieure (4.1, 4.4, 4.6, 4.7, 4.9) qui peuvent être fixées l'une à l'autre pour former une buse (4), la partie intérieure (4.2, 4.3, 4.5, 4.8) étant en forme d'anneau cylindrique, dont la partie supérieure a un fil externe à visser à la partie extérieure (4.1, 4.4, 4.6, 4.7, 4.9) et un fil interne à visser à une vanne d'alimentation ou à un robinet ; et la partie extérieure (4.1, 4.4, 4.6, 4.7, 4.9), dont la première portion supérieure est en forme d'anneau cylindrique et qui se termine à l'extrémité inférieure de manière élargie dans une bride circulaire inclinée et raccordée, ayant sur la partie intérieure supérieure un fil qui peut être vissé à celui formé sur la partie intérieure (4.2, 4.3, 4.5, 4.8) ;
où la partie extérieure (4.1, 4.4, 4.6, 4.7, 4.9) et la partie intérieure (4.2, 4.3, 4.5, 4.8) sont formées d'un matériau métallique et où dans la première portion supérieure de la partie extérieure (4.1, 4.4, 4.6, 4.7, 4.9) et la partie intérieure (4.2, 4.3, 4.5, 4.8) qui sont toutes deux en forme d'anneau cylindrique définissent, lorsque l'accouplement s'est produit, un espace substantiellement cylindrique suffisant pour enfermer, comprendre et verrouiller entre elles le noyau (2, 2.1, 2.2) d'une bouteille (1) ;
où au moins la partie extérieure (4.1, 4.4, 4.6, 4.7, 4.9) ou la partie intérieure (4.2, 4.3, 4.5, 4.8) a au moins un siège ou une rainure annulaire (7) sur la surface en contact avec le noyau (2, 2.1, 2.2) de la bouteille (1), adapté pour recevoir un joint toroïdal (5), de préférence en forme de joint torique ou avec une lèvre ;
où la partie extérieure (4.1, 4.4, 4.6, 4.7, 4.9) peut ensuite se verrouiller contre le noyau (2, 2.1, 2.2) de la bouteille (1) au moyen d'une enveloppe extérieure avec plusieurs couches (3), de préférence faite de fibres et de résines de renforcement, intégrant la partie extérieure (4.1, 4.4, 4.6, 4.7, 4.9) presque complètement dans la masse de la bouteille (1).

2. Le col selon l'affirmation 1, dont dans la partie intérieure (4.2, 4.3, 4.5, 4.8) est de forme annulaire, de type extractible et qui peut être démontée et remontée en dévissant et vissant afin de faciliter l'entretien et le remplacement du joint annulaire des joints (5) y figurant.

3. Le col selon les affirmations 1 ou 2, dans lequel la portion centrale de la partie intérieure (4.2, 4.3, 4.5, 4.8) de la buse (4) a un siège axial interne (9), de préférence en forme hexagonale, adaptée pour recevoir une clé afin de faciliter l'action de verrouillage et/ou de démontage avec la partie extérieure respective (4.1, 4.4, 4.6, 4.7, 4.9).

4. Le col selon une ou plusieurs des affirmations 1 à 3, dans lequel la partie extérieure (4.6) et la partie intérieure (4.5) formant la buse (4) ont des fils internes-externes respectifs en contact direct avec l'extrémité du noyau (2.1), cette dernière étant également filetée (6), sur la partie terminale intérieure et sur celle extérieure.

5. Le col selon l'affirmation 4, dans lequel les fils sur la partie terminale extérieure et intérieure du noyau (2.2) et sur la partie extérieure (4.7) et la partie intérieure (4.8) de la buse (4) sont de type conique (6.1) .

6. Le col selon une ou plusieurs des affirmations 1 à 5, dans lequel la partie extérieure (4.9) de la buse (4) a, dans la partie intérieure en contact avec le noyau (2, 2.1, 2.2), au moins un siège de rainure (7) adapté pour recevoir un joint toroïdal approprié (5).

7. Col pour bouteilles à haute pression, à appliquer avec un noyau interne (2) fabriqué en tôle de matériau métallique ou en plastique et doublé sur l'extérieur avec plusieurs couches de fibres et de résines de renforcement,
où le col est composé d'une partie intérieure (4.3) et d'une partie extérieure (4.4) qui peuvent être fixées l'une à l'autre pour former une buse (4), la partie intérieure (4.3) étant en forme d'anneau cylindrique, dont la portion supérieure a un fil externe à visser à la partie extérieure (4.4) et un fil interne à visser à une vanne d'alimentation ou à un robinet ; et la partie extérieure (4.4), dont la première portion supérieure est en forme d'anneau cylindrique et se termine à l'extrémité inférieure de manière élargie dans une bride circulaire inclinée et raccordée, ayant sur la portion intérieure supérieure un fil qui peut être vissé à celui formé sur la partie intérieure (4.3) ;
où la partie extérieure (4.4) et la partie intérieure (4.3) sont formées d'un matériau métallique et définissent, lorsque l'accouplement s'est produit, un espace substantiellement cylindrique suffisant pour enfermer, comprendre et verrouiller entre elles le noyau (2) d'une bouteille (1) ;
où la partie intérieure (4.3) a au moins un siège ou une rainure annulaire (7) sur la surface en contact avec le noyau (2) de la bouteille (1), adapté pour recevoir un joint toroïdal (5), de préférence en forme de joint torique ou avec une lèvre ;
où la partie extérieure (4.4) peut ensuite se verrouiller au noyau (2) de la bouteille (1) au moyen d'une enveloppe extérieure avec plusieurs couches (3), de préférence faite de fibres et de résines de renforcement, intégrant la partie extérieure (4.4) presque complètement dans la masse de la bouteille (1).
où l'élément intérieur (4.3) de la buse (4) ne peut être extrait à travers l'ouverture centrale, puisqu'il est de forme évasée dans la partie intérieure - élargissement de manière circonférentielle - et a au moins deux sièges (7) pour les joints (5), un sur la partie cylindrique et un sur la partie élargie, en contact direct avec le noyau (2) de la bouteille (1).

8. Le col selon une ou plusieurs des affirmations 1 à 7, où dans la partie inférieure centrale de la partie extérieure (4.1, 4.4, 4.6. 4.7, 4.9), une configuration polygonale est fournie (8), de préférence une configuration octogonale, pour mettre à disposition une surface plus résistante à la rotation axiale après l'enveloppement avec plusieurs couches (3) de fibres et de résines de renforcement.

9. La méthode pour la fixation d'un col selon une ou plusieurs des affirmations 1 à 8 au corps d'une bouteille (1) appliquée en utilisant des matériaux composites, comprenant :
l'insertion du joint (5) dans le siège correspondant de la rainure annulaire (7) formée dans la partie intérieure (4.2, 4.3, 4.5, 4.8), ou l'insertion d'un joint respectif (5) dans le siège correspondant respectif ou la rainure annulaire (7) formée dans la partie intérieure (4.2, 4.3, 4.5, 4.8) et la partie extérieure (4.1, 4.4, 4.6, 4.7, 4.9) ;
le placement de la partie intérieure (4.2, 4.3, 4.5, 4.8) en adhérence sur la partie terminale intérieure du noyau (2, 2.1, 2.2) de la bouteille ;
le vissage de la partie extérieure (4.1, 4.4, 4.6, 4.7, 4.9) à la partie intérieure (4.2, 4.3, 4.5, 4.8) et le verrouillage de cette manière de la partie terminale du noyau (2, 2.1, 2.2) ;
l'enveloppement de la partie extérieure (4.1, 4.4, 4.6, 4.7, 4.9) de la buse (4) avec plusieurs couches (3) de fibres de renforcement, de préférence des fibres de verre et équivalents, et des résines pendant la phase de construction finale de toute la bouteille (1) de type léger, obtenue par enveloppement du noyau (2, 2.1, 2.2), de préférence faite en tôle ou en plastique, etc., avec des matériaux composites, de préférence des fibres de renforcement et des résines synthétiques.
